# EUROPÄISCHE PATENTSCHRIFT

(11) **EP 0 499 139 B1**
(45) Veröffentlichungstag und Bekanntmachung des Hinweises auf die Patenterteilung: **31.05.1995**
(21) Anmeldenummer: 92101966.7
(22) Anmeldetag: 06.02.1992
(51) Int. Cl.: B29C 45/73, B29C 47/86, B29C 49/64, B29C 33/04

(54) **Einrichtung zum Beaufschlagen von mehreren Formen mit einem oder mehreren Fluiden und zum Temperieren der Formen für die Kunststoffverarbeitung**
Device for admitting several moulds with one ore more fluids and for temperating the moulds for processing plastics
Dispositif pour admettre un ou plusieurs fluides dans plusieurs moules et pour tempérer les moules pour la transformation des matières plastiques

(30) Priorität: 12.02.1991 DE 4104152
(43) Veröffentlichungstag der Anmeldung: 19.08.1992
(73) Patentinhaber: Delcroix, Jean-Louis, F-84600 Valréas (FR)
(72) Erfinder: Delcroix, Jean-Louis, F-84600 Valréas (FR)
(74) Vertreter: Rehders, Jochen, Dipl.-Ing.

(56) Entgegenhaltungen:
- EP-A- 0 195 231
- DE-A- 3 222 828
- FR-A- 2 613 979

## Beschreibung

Die Erfindung betrifft eine Einrichtung zum Beaufschlagen von mehreren Formen für die Kunststoffverarbeitung mit einer Flüssigkeit oder einem Gas und zum Temperieren der Formen mit einzelnen über Zuläufe mit einer Gasquelle und einer Flüssigkeitsquelle verbindbaren Formen. Eine derartige Einrichtung ist in der französischen Patentanmeldung 26 13 979 beschrieben.

Bei derartigen Einrichtungen besteht das Problem, die einzelnen Formen unabhängig voneinander zu temperieren. Dieses Problem tritt insbesondere bei Spritzgußformen, Blasformen oder Extrusionsformen auf. Diese Formen müssen in der Regel auf einer bestimmten Temperatur gehalten werden, die bei Spritzguß- und Blasformen ein Abkühlen des eingeführten, plastifizierten Kunststoffs und damit dessen Verfestigung bewirkt, um das geformte Teil möglichst schnell aus der Form entnehmen zu können. Die Temperatur muß jedoch so hoch sein, daß der Kunststoff die Form vollständig ausfüllt und nicht vor dem vollständigen Ausfüllen der Form "einfriert". Beim Extrudieren muß die Extrusionsform in der Regel geheizt werden, um den extrudierten Strang kontinuierlich und mit einwandfreier Oberfläche abzuführen und in einem Kühlbad abkühlen zu können.

Um die sehr teuren Kunststoffverarbeitungsmaschinen möglichst effektiv einsetzen zu können, wird des weiteren gefordert, daß sich die Formen möglichst schnell auswechseln lassen, um beim Einrichten eines anderen Spritzguß- oder Blasformteils oder eines anderen Extrusionsprofils möglichst kurze Stillstandszeiten der Maschinen hinnehmen zu müssen.

Zu diesem Zweck ist es bekannt, die Anschlüsse an den Formen als Schnellkupplungen auszubilden, die sich leicht lösen lassen und so gestaltet sind, daß beim Lösen der Kupplung kein Fluid aus den Leitungen und den Formen selber austreten kann.

Da die Formen in der Regel mit Wasser gekühlt werden, kann es vorkommen, daß das Wasser über längere Zeit in den Hohlräumen der Formen verbleibt und dort zu Korrosion führt. Des weiteren sind derartige Schnellkupplungen teuer und störanfällig. Werden einfache Schnellkupplungen verwendet, die sich beim Lösen nicht automatisch schließen, läuft das Fluid aus den Formen aus und führt zu Verschmutzungen und Korrosion an der Formaußenseite und, was sehr viel schwerwiegender ist, in den Formhohlräumen.

Wichtig ist des weiteren, um eine hohe Ausnutzung der Maschinen zu erreichen, daß die Formen sehr schnell auf die gewünschte Temperatur gelangen.

Der Erfindung liegt die Aufgabe zugrunde, eine Einrichtung zum Temperieren und zum Zuführen unterschiedlicher Fluide zu mehreren Formen zu schaffen, die einfach aufgebaut ist, eine schnelle Temperaturregelung der einzelnen Formen zu erreichen und ein einfaches Ersetzen eines Fluids durch ein anderes in der Einrichtung durchzuführen gestattet. Des weiteren soll ein Verfahren geschaffen werden, mit dem sich ein schneller Formenwechsel vorbereiten läßt.

Ausgehend von dieser Aufgabenstellung wird bei einer Einrichtung der eingangs erwähnten Art vorgeschlagen, daß erfindungsgemäß die Formen einzeln über Zuläufe und wenigstens ein Drei-Wege-Ventil mit einer Gasquelle und einer Flüssigkeitsquelle verbunden sind und je ein Thermostatventil in jedem Ablauf aus jeder Form angeordnet ist.

Mittels des Drei-Wege-Ventils lassen sich den einzelnen Formen nacheinander eine Flüssigkeit oder ein Gas zum Austreiben der Flüssigkeit aus den Leitungen zuführen. Über die einzelnen Thermostatventile läßt sich jede Vorrichtung feinfühlig auf eine vorgebbare Temperatur einstellen. Für die Gasquelle und für die Flüssigkeitsquelle kann jeweils ein Verteilerelement vorgesehen sein, während in jedem der Zuläufe zu den Formen ein Drei-Wege-Ventil angeordnet ist, das gleichzeitig als Absperrventil dient. Auf diese Weise lassen sich die Formen einzeln und getrennt jeweils mit der Flüssigkeitsquelle oder der Gasquelle verbinden, ohne daß sich die Kreisläufe gegenseitig beeinflussen. In diesem Fall läßt sich jeweils eine Form oder lassen sich mehrere Formen auswechseln, nachdem die Flüssigkeit aus dem jeweiligen Kreislauf ausgetrieben wurde, während andere Formen weiter mit Flüssigkeit beaufschlagt und unverändert weiterbenutzt werden.

Es ist jedoch auch möglich, nur ein eingangsseitig mit der Gasquelle und der Flüssigkeitsquelle verbundenes Drei-Wege-Ventil vorzusehen, das ausgangsseitig mit dem Eingang eines einzigen Verteilerelements verbunden ist und im Anschluß an das Verteilerelement in jedem Zulauf zu den einzelnen Formen Absperrventile anzuordnen. In diesem Fall lassen sich die Formen ebenfalls einzeln und unabhängig voneinander auswechseln, jedoch müssen die nichtauszuwechselnden Formen durch Schließen der zugehörigen Absperrventile vom Verteilerelement getrennt werden, um zu vermeiden, daß auch aus diesen Formen die Flüssigkeit durch das Gas ausgetrieben wird. Der Aufbau der Einrichtung wird dadurch in dessen einfacher, da nur ein Verteilerelement und nur ein Drei-Wege-Ventil im Zugang zum Verteilerelement benötigt werden.

Falls die Flüssigkeit in einem geschlossenen Kreislauf über ein Temperiergerät geführt wird, kann je ein in jedem Ablauf aus jeder Form angeordnetes oder ein im Anschluß an einen Ablaufsammler angeordnetes, jeweils mit dem oder den eingangsseitigen Drei-Wege-Ventilen gekuppeltes weiteres Drei-Wege-Ventil vorgesehen sein. Hierdurch wird erreicht, daß in der einen Stellung der einlaufseitigen und ablaufseitigen Drei-Wege-Ventile die Flüssigkeit im Kreislauf durch die Formen und das Temperiergerät geführt wird, während in der anderen Stellung zulaufseitig Druckluft in die Formen geführt wird, die die in den Formen befindliche Flüssigkeit ablaufseitig ins Freie, z. B. in eine Auffangwanne führt, während das Temperiergerät mit Flüssigkeit gefüllt bleibt, so daß nach Einschalten des Flüssigkeitskreislaufs sofort wieder temperierte Flüssigkeit in die Formen gelangt.

Um die Temperatur der einzelnen Formen noch feinfühliger und schneller regeln zu können, kann in jedem Zulauf zu jeder Form ein Heizelement angeordnet sein.

Um einen schnellen Anstieg der Temperatur nach dem Anschluß einer Vorrichtung an den Verteiler zu erreichen, kann in jedem Ablauf einer Vorrichtung ein Temperaturregeler für das jeweilige Heizelement angeordnet sein.

Vorzugsweise kann der Temperaturregler für das Heizelement vor dem Thermostatventil angeordnet sein. Der Temperaturregler beeinflußt das Heizelement, während das Thermostatventil den Durchfluß durch die Vorrichtung in Abhängigkeit von der Ablauftemperatur regelt.

Um zu verhindern, daß sich das Heizelement überhitzt, wenn z. B. kein Fluid in den Leitungen vorhanden ist, oder aufgrund eines Lecks ausgelaufen ist, kann ein Sicherheitstemperaturschalter in jedem Zulauf zu jeder Vorrichtung im Anschluß an das Heizelement angeordnet sein.

Das Heizelement kann vorzugsweise elektrisch beheizt sein. Um die Vorrichtungen schnell und einfach auswechseln zu können, können Schnellkupplungen im Zulauf und Ablauf jeder Vorrichtung angeordnet sein.

Vorzugsweise kann die eine Fluidquelle ein Wasser- oder Ölanschluß und die andere Fluidquelle ein Druckluftanschluß sein.

Um mehrere Vorrichtungen mit einer erfindungsgemäßen Einrichtung zu temperieren und einen schnellen Wechsel einer Vorrichtung, z. B. einer an einen Flüssigkeitskreis angeschlossenen, mit einer Spritzgießmaschine oder einem Extruder zusammenwirkenden Form durchzuführen, können zunächst die Anschlüsse des Flüssigkeitskreises abgesperrt und dann mit einem Druckgas, vorzugsweise Preßluft, beaufschlagt werden. Dadurch wird die Flüssigkeit, vorzugsweise Wasser, aus dem Flüssigkeitskreis ausgetrieben. Die Preßluft wird solange durch den Flüssigkeitskreis geleitet, bis er vollständtig trocken ist.

Zu diesem Zweck kann der Flüssigkeitskreis einer Form von der Flüssigkeitszufuhr getrennt und mit einer Preßluftquelle verbunden werden. Es ist aber auch möglich, die Flüssigkeit und die Preßluft über ein Drei-Wege-Ventil abzuschließen, das nur umgeschaltet zuwerden braucht, wenn man von Wasser auf Preßluft und umgekehrt umstellen will.

Die Erfindung wird nachstehend anhand zweier in der Zeichnung dargestellter Ausführungsbeispiele des näheren erläutert. In der Zeichnung zeigen:
- Fig. 1: eine Einrichtung mit einem Drei-Wege-Ventil vor einem Verteilerelement und
- Fig. 2: eine Einrichtung mit mehreren in Anschluß an Verteilerelemente für das Gas und die Flüssigekit angeordneten Drei-Wege-Ventilen.

Ein Verteilerelement 3 ist mit einem Ausgang 17 eines Drei-Wege-Ventils 2 verbunden. Ein Eingang 15 des Drei-Wege-Ventils 2 ist über ein Rückschlagventil 1 mit einer Druckluftquelle 13 verbunden, während ein zweiter Eingang 16 des Drei-Wege-Ventils 2 mit einem Wasseranschluß 14 verbunden ist. An das Verteilerelement 3 sind eine größere Anzahl Zuläufe 18 angeschlossen, die sich mit mehreren Vorrichtungen z. B. Spritzgußformen 8, verbinden lassen. In der Zeichnung ist nur ein vollständiger Fluidkreis für eine Spritzgußform 8 dargestellt. In den Zulauf 18 ist zunächst ein Absperrventil 4 geschaltet, das handbetätigt sein kann, das aber auch als Sicherheitsventil mit automatischem Verschluß ausgebildet sein kann, um einen Austritt des Fluids bei Leitungsbruch zu verhindern. In dem Zulauf 18 ist des weiteren ein elektrisches Heizelement 5 angeordnet, das zum Erwärmen des durch den Zulauf 18 zugeführten Fluids dient. Ein im Anschluß an das Heizelement 5 angeordneter Sicherheitstemperaturschalter 6 dient dazu, die Energiezufuhr zum Heizelement 5 zu unterbrechen, wenn ein übermäßiger Anstieg der Temperatur, z. B. aufgrund eines Lecks eintritt.

Der Zulauf 18 ist mit der Spritzgußform 8 über eine Schnellkupplung 7 verbunden. Ein Ablauf 19 ist ebenfalls mit der Spritzgußform 8 über eine Schnellkupplung 9 verbunden. Durch Lösen dieser Schnellkupplungen 7, 9 und nicht dargestellter Befestigungen läßt sich die Spritzgußform 8 sehr schnell gegen eine andere Spritzgußform austauschen. Die Schnellkupplungen 7, 9 können mit einem automatischen Verschluß versehen sein, der ein Auslaufen des Fluids aus der Spritzgußform 8 und aus dem Zulauf 18 sowie dem Ablauf 19 beim Lösen der Schnellkupplungen 7, 9 verhindert.

Bevorzugterweise sind diese Schnellkupplungen 7, 9 jedoch nicht mit einer solchen Auslaufsicherung versehen, da das Fluid in der Spritzgußform 8, das Wasser oder Öl sein kann, vor dem Lösen der Schnellkupplungen aus der Spritzgußform 8 entfernt wird.

Im Ablauf 19 ist ein Temperaturregler 10 für das Heizelement 5 angeordnet, der zum Regeln der Temperatur des durch die Spritzgußform 8 fließenden Fluids dient. Die Durchflußmenge wird durch ein Thermostatventil 11 geregelt, das dafür sorgt, daß nur die Fluidmenge durch die Spritzgußform 8 strömt, die erforderlich ist, um die in der Spritzgußform 8 durch den Spritzvorgang hineingetragene Wärmemenge abzuführen. Mehrere Abläufe 19 gelangen in einen Ablaufsammler 12, von dem das Fluid in einen nicht dargestellten Sammelbehälter fließt, wenn es sich bei dem Fluid um eine Flüssigkeit handelt.

Während des Betriebes, d. h. wenn mehrere Spritzgußformen 8 auf unterschiedlichen Spritzgießmaschinen mit einem Fluid, in der Regel mit Kühlwasser, vom Kühlwasseranschluß 14 über das Drei-Wege-Ventil 2 und das Verteilerelement 3 versorgt werden, kann die Temperatur der einzelnen Spritzgußformen 8 über den Temperaturregler 10 und das Thermostatventil 11 feinfühlig und unterschiedlich geregelt werden.

Sollen eine oder mehrere Spritzgußformen 8 ausgewechselt werden, sei es, weil Wartungs- oder Reparaturarbeiten nötig sind, sei es, weil ein anderes Teil gefertigt werden soll, werden die Absperrventile 4 der nichtauszuwechselnden Spritzgußformen 8 geschlossen. Das Drei-Wege-Ventil 2 wird so umgestellt, daß der Eingang 15 mit dem Ausgang 17 in Verbindung steht und Druckluft aus der Druckluftquelle 13 in das Verteilerelement 3 und von dort aus durch Zuläufe 18 in die Spritzgußformen 8 gelangt, deren Absperrventile 4 nicht verschlossen wurden. Auf diese Weise wird aus diesen Spritzgußformen 8 das Kühlwasser mittels Druckluft ausgetrieben, und diese Spritzgußformen werden anschließend mittels der Druckluft getrocknet. Danach lassen sich die Spritzgußformen 8 nach Lösen der Schnellkupplungen 7, 9 und der üblichen Befestigungen aus der Spritzgießmaschine herausnehmen und können gewartet oder repariert oder gegen eine andere Spritzgußform ausgetauscht werden. Eine Korrosionsgefahr besteht nicht mehr, da die Formen vollständig trocken sind.

Statt eines Wasseranschlusses 14 läßt sich auch ein Druckölanschluß vorsehen, da sich Öl bei atmosphärischem Druck auf eine höhere Temperatur als 100° C erwärmen läßt und insbesondere zum Heizen von Extrusionsscheiben, die eine höhere Temperatur aufweisen müssen, geeignet ist. Statt Preßluft läßt sich auch ein anderes Gas, z. B. Stickstoff verwenden, wenn das aus besonderen Gründen ein weitgehend inertes Gas benötigt wird.

Steht über den Wasseranschluß 14 Kühlwasser mit gleichmäßiger Temperatur zur Verfügung, kann dieses Kühlwasser nach Durchlaufen der Formen 8 vom Ablaufsammler 12 aus in den Vorfluter geleitet werden. Handelt es sich bei der Flüssigkeit um Öl oder soll die durch die Formen 8 geführte Flüssigkeit von vorneherein temperiert werden, kann die Flüssigkeit, wie gestrichelt dargestellt, im geschlossenen Kreislauf umgewälzt werden, indem sie vom Ablaufsammler 12 über ein weiteres Drei-Wege-Ventil 22, eine Umwälzpumpe 24 und ein Temperiergerät 23 dem Eingang 16 zum Drei-Wege-Ventil 2 zugeführt wird. In diesem Fall sind die Drei-Wege-Ventile 2, 22 miteinander gekuppelt, so daß in der einen Stellung der Flüssigkeitskreislauf sowohl zulaufseitig als auch ablaufseitig geöffnet ist, während in der anderen Stellung die Druckluftquelle 13 mit dem Verteilerelement 3 und der Ablaufsammler 12 über das Drei-Wege-Ventil 22 mit einem nicht dargestellten Auffangbehälter verbunden ist, so daß durch die Druckluft zunächst die Flüssigkeit aus dem Verteilerelement 3, der jeweiligen Form 8 sowie dem Ablaufsammler 12 ausgetrieben und anschließend durch Druckluft ersetzt wird. Während dieser Zeit sind selbstverständlich die Absperrventile 4 derjenigen Formen 8, aus denen die Flüssigkeit nicht ausgetrieben werden soll, geschlossen und werden erst wieder geöffnet, wenn die Drei-Wege-Ventile 2, 22 zurückgeschaltet und das Verteilerelement 3, eine ausgewechselten Form 8 sowie der Ablaufsammler 12 wieder mit Flüssigkeit gefüllt sind.

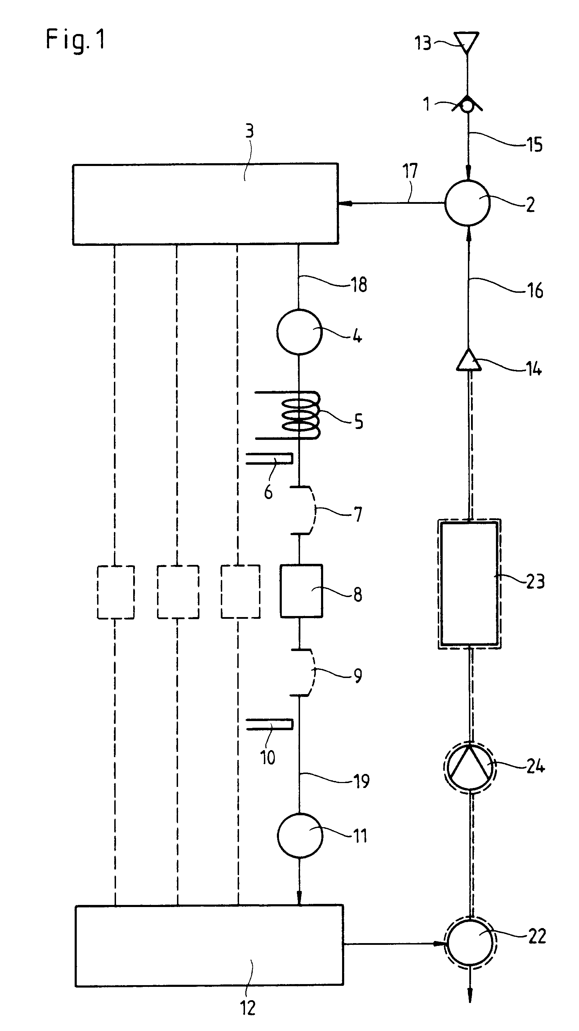

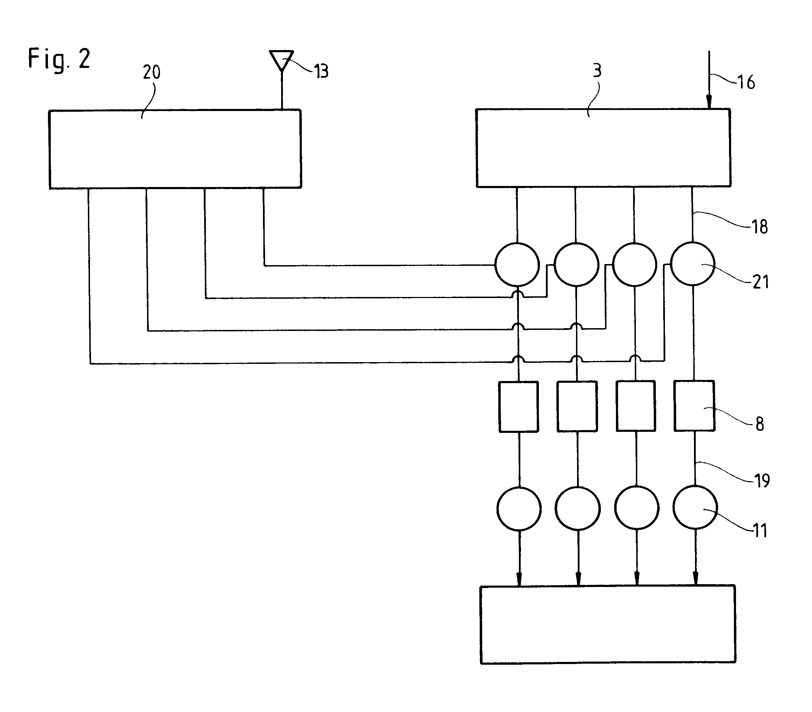

Während bei dem Ausführungsbeispiel gemäß Fig. 1 im einfachsten Fall nur ein Drei-Wege-Ventil 2 und ein Verteilerelement 3, jedoch ebensoviele Absperrventile 4 wie Formen 8 vorhanden sind, zeigt das Ausführungsbeispiel gemäß Fig. 2 ein Verteilerelement 3 für die Flüssigkeit und ein Verteilerelement 20 für das Gas und in den Zuläufen 18 zu den einzelnen Formen 8 angeordnete Drei-Wege-Ventile 21. Mittels dieser Drei-Wege-Ventile 21 lassen sich die einzelnen Formen 8 mit dem Flüssigkeitsverteilerelement 3 oder dem Gasverteilerelement 20 verbinden. Auf diese Weise lassen sich die Formen 8 einzelen auswechseln, nachdem die Flüssigkeit ausgetrieben wurde, ohne daß die Benutzung der anderen, nicht auszuwechselnden Formen unterbrochen werden muß. Gleichzeitig können die Drei-Wege-Ventile 21 als Absperrventile dienen, so daß sich in diesem Fall die bei der Ausführungsform gemäß Fig. 1 erforderlichen Absperrventile 4 erübrigen.

## Patentansprüche

1. Einrichtung zum Beaufschlagen von mehreren Formen (8) für die Kunststoffverarbeitung mit einer Flüssigkeit oder einem Gas und zum Temperieren der Formen mit einzeln über Zuläufe (18) mit einer Gasquelle (13) und einer Flüssigkeitsquelle (14) verbindbaren Formen, **dadurch gekennzeichnet**, daß die Formen (8) einzeln über die Zuläufe (18) und wenigstens über ein Drei-Wege-Ventil (2, 21) mit der Gasquelle (13) und der Flüssigkeitsquelle (14) verbunden sind und in jeden Ablauf (19) aus jeder Form je ein Thermostatventil (11) angeordnet ist.

2. Einrichtung nach Anspruch 1, **gekennzeichnet durch** je ein eingangsseitig jeweils mit der Gasquelle (13) und der Flüssigkeitsquelle (14) verbundenes Verteilerelement (3, 20) und in jedem der Zuläufe (18) angeordneten Drei-Wege-Ventilen (21).

3. Einrichtung nach Anspruch 1, **gekennzeichnet durch** ein eingangsseitig mit der Gasquelle (13) und der Flüssigkeitsquelle (14) verbundenes Drei-Wege-Ventil (2), ein eingangsseitig mit dem Ausgang (17) des Drei-Wege-Ventils verbundenes Verteilerelement (3) und in jedem Zulauf (18) zu den einzelnen Formen (8) angeordneten Absperrventilen (17).

4. Einrichtung nach Anspruch 2 oder 3, **gekennzeichnet durch** je ein in jedem Ablauf (19) angeordnetes oder ein im Anschluß an einen Ablaufsammler (12) angeordnetes, jeweils mit den Drei-Wege-Ventilen (2 bzw. 21) gekuppeltes weiteres Drei-Wege-Ventil (22).

5. Einrichtung nach einem oder mehreren der Ansprüche 1 bis 4, **gekennzeichnet durch** je ein in jedem Zulauf (18) zu jeder Form (8) angeordnetes Heizelement.

6. Einrichtung nach Anspruch 5, **dadurch gekennzeichnet**, daß in jedem Ablauf (19) je ein Temperaturregler (10) für jedes Heizelement (5) angeordnet ist.

7. Einrichtung nach Anspruch 6, **dadurch gekennzeichnet**, daß der Temperaturregler (10) vor dem Thermostatventil (11) angeordnet ist.

8. Einrichtung nach einem oder mehreren der Ansprüche 5 bis 7, **dadurch gekennzeichnet**, daß ein Sicherheitstemperaturschalter (6) in jedem Zulauf (18) zu jeder Vorrichtung (8) im Anschluß an das Heizelement (5) angeordnet ist.

9. Einrichtung nach einem oder mehreren der Ansprüche 5 bis 8, **gekennzeichnet durch** ein elektrisches Heizelement (5).

10. Einrichtung nach einem oder mehreren der Ansprüche 1 bis 9, **gekennzeichnet durch** Schnellkupplungen (7, 9) im Zulauf (18) und im Ablauf (19) jeder Vorrichtung (8).

11. Einrichtung nach einem oder mehreren der Ansprüche 1 bis 10, **dadurch gekennzeichnet**, daß die Flüssigkeitsquelle ein Wasseranschluß (14) und die Gasquelle ein Druckluftanschluß (13) ist.

12. Verwendung von einer Einrichtung nach einem oder mehreren der Ansprüche 1 bis 11 zum Vorbereiten eines schnellen Formenwechsels einer an einem Kühlwasserkreis und einer Druckluftquelle über wenigstens ein Drei-Wege-Ventil angeschlossenen, mit einer Spritzgießmaschine oder einem Extruder zusammenwirkenden Form, in denen die Kühlwasserzufuhr zu dem oder den Anschlüssen des Kühlwasserkreises an der Form durch Betätigen des oder der Drei-Wege-Ventile abgesperrt und die Anschlüsse mit Druckluft zum Austreiben des Wassers aus dem Kühlwasserkreislauf solange beaufschlagt werden, bis der Kühlwasserkreis vollständig trocken ist.

## Claims

1. An apparatus for supplying a plurality of moulds (8) for plastics processing with a liquid or a gas and for temperature-control of the moulds, with moulds which can be connected individually via inlets (18) to a gas source (13) and a liquid source (14), characterised in that the moulds (8) are connected individually via the inlets (18) and at least via one three-way valve (2, 21) to the gas source (13) and to the liquid source (14) and one thermostatic valve (11) is located in each outlet (19) from each mould.

2. An apparatus according to Claim 1, characterised by one distributor element (3, 20) connected on the entry side in each case to the gas source (13) and the liquid source (14), and three-way valves (21) located in each of the inlets (18).

3. An apparatus according to Claim 1, characterised by a three-way valve (2) connected on the entry side to the gas source (13) and to the liquid source (14), a distributor element (3) connected on the entry side to the outlet (17) of the three-way valve and shut-off valves (17) located in each inlet (18) to the individual moulds (8).

4. An apparatus according to Claim 2 or 3, characterised by one additional three-way valve (22) in each case located in each outlet (19) or located succeeding an outlet collector (12), which valve in each case is coupled to the three-way valves (2 or 21).

5. An apparatus according to one or more of Claims 1 to 4, characterised by one heating element located in each inlet (18) to each mould (8).

6. An apparatus according to Claim 5, characterised in that one temperature controller (10) for each heating element (5) is located in each outlet (19).

7. An apparatus according to Claim 6, characterised in that the temperature controller (10) is located in front of the thermostatic valve (11).

8. An apparatus according to one or more of Claims 5 to 7, characterised in that a temperature safety switch (6) is located in each inlet (18) to each device (8) succeeding the heating element (5).

9. An apparatus according to one or more of Claims 5 to 8, characterised by an electric heating element (5).

10. An apparatus according to one or more of Claims 1 to 9, characterised by quick-fitting couplings (7, 9) in the inlet (18) and in the outlet (19) of each device (8).

11. An apparatus according to one or more of Claims 1 to 10, characterised in that the liquid source is a water connection (14) and the gas source is a compressed-air connection (13).

12. The use of an apparatus according to one or more of Claims 1 to 11 for preparing for a rapid mould change of a mould which is connected to a cooling-water circuit and a compressed-air source via at least one three-way valve and which cooperates with an injection-moulding machine or an extruder, in which mould the supply of cooling water to the connection(s) of the cooling-water circuit on the mould is blocked off by actuating the three-way valve(s) and the connections are supplied with compressed air to drive the water out of the cooling-water circuit until the cooling-water circuit is completely dry.

## Revendications

1. Dispositif d'alimentation de plusieurs moules (8), pour le traitement des matières synthétiques avec un liquide ou un gaz et pour mettre en équilibre de température les moules avec des moules pouvant être reliés par des amenées (18) à une source de gaz (13) et à une source de liquide (14), caractérisé en ce que les moules (8) sont reliés individuellement à la source de gaz (13) et à la source de liquide (14) par l'intermédiaire des amenées (18) et au moins par l'intermédiaire d'une soupape à trois voies (2, 21) et une soupape thermostatique (18) étant disposée dans chaque évacuation (19) de chaque moule.

2. Dispositif selon la revendication 1, caractérisé par un élément distributeur (3, 20) relié côté entrée chaque fois à la source de gaz (13) et à la source de liquide (14) et par des soupapes à trois voies (21) disposées dans chacune des amenées (18)

3. Dispositif selon la revendication 1, caractérisé par une soupape à trois voies (2) reliée côté entrée à la source de gaz (13) et à la source de liquide (14), un élément distributeur (3) relié côté entrée à la sortie (17) de la soupape à trois voies et par des soupapes d'isolement (19) disposées dans chaque amenée (18) allant aux différents moules (8).

4. Dispositif selon la revendication 2 ou 3, caractérisé par chaque fois une soupape à trois voies supplémentaire (22) disposée dans chaque évacuation (19) ou en raccordement à un collecteur d'évacuation (12) et couplée chaque fois aux soupapes à trois voies (2, respectivement 21).

5. Dispositif selon l'une ou plusieurs des revendications 1 à 4, caractérisé chaque fois par un élément chauffant disposé dans chaque amenée (18) à chaque moule (8).

6. Dispositif selon la revendication 5, caractérisé en ce que dans chaque évacuation (19) est disposé un régulateur de température (10) destiné à chaque élément chauffant (5).

7. Dispositif selon la revendication 6, caractérisé en ce que le régulateur de température (10) est disposé en amont de la soupape thermostatique (11).

8. Dispositif selon l'une ou plusieurs des revendications 5 à 7, caractérisé en ce qu'un thermostat de sécurité (6) est disposé dans chaque amenée (18) à chaque dispositif (8), raccordé à l'élément chauffant (5).

9. Dispositif sel on l'une ou plusieurs des revendications 5 à 8, caractérisé par un élément chauffant électrique (5).

10. Dispositif selon l'une ou plusieurs des revendications 1 à 9, caractérisé par des raccords rapides (7, 9) montés dans l'amenée (18) et dans l'évacuation (19) de chaque dispositif (8).

11. Dispositif sel on l'une ou plusieurs des revendications 1 à 10, caractérisé en ce que la source de liquide est un raccordement d'eau (14) et la source de gaz est un raccordement d'air comprimé (13).

12. Utilisation d'un dispositif sel on l'une ou plusieurs des revendications 1 à 11, pour la préparation d'un changement de moule rapide d'un moule raccordé à un circuit d'eau de refroidissement et à un circuit d'air comprimé par l'intermédiaire d'au moins une soupape à trois voies, avec une machine à mouler par injection ou un moule coopérant avec une extrudeuse, dans lequel l'amenée d'eau de refroidissement au moule ou au raccordement du circuit d'eau de refroidissement est isolée par actionnement de la ou des soupapes à trois voies et les raccordements par mise an butée étant alimentées an air comprimé pour expulser l'eau hors du circuit d'eau de refroidissement jusqu'à ce que le circuit d'eau de refroidissement soit complètement sec.
